(19) Europäisches Patentamt
European Patent Office
Office européen des brevets

(11) Veröffentlichungsnummer: **0 158 810**
**A1**

(12) # EUROPÄISCHE PATENTANMELDUNG

(21) Anmeldenummer: 85102685.6

(22) Anmeldetag: 08.03.85

(51) Int. Cl.[4]: A 01 N 47/30
A 01 N 47/36
//(A01N47/30, 37:50, 37:38),
(A01N47/36, 37:50, 37:38)

(30) Priorität: 20.03.84 DE 3410105

(43) Veröffentlichungstag der Anmeldung: 23.10.85 Patentblatt 85/43

(84) Benannte Vertragsstaaten: AT BE DE FR GB IT NL SE

(71) Anmelder: HOECHST AKTIENGESELLSCHAFT
Postfach 80 03 20
D-6230 Frankfurt am Main 80(DE)

(72) Erfinder: Schumacher, Hans, Dr.
Claudiusstrasse 4
D-6093 Flörsheim am Main(DE)

(54) **Herbizide Mittel.**

(57) Die herbiziden Mittel enthalten ein Diphenyletherderivat der Fomel (I)

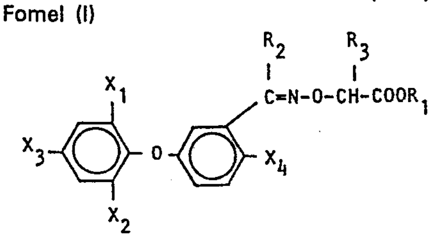

(I)

in Kombination mit einem Harnstoffderivat der Formel (II), z.B. Isoproturon oder Chlortoluron,

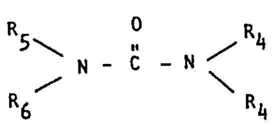

(II)

wobei die Symbole folgende Bedeutung haben:

$R_1$ H, $(C_1-C_{10})$Alkyl oder ein Kationäquivalent;
$R_2$, $R_3$, $R_4$, $R_5$ unabhangig voneinander H oder $(C_1-C_4)$ Alkyl;
$R_6$ ein- oder zweimal durch Cl, $(C_1-C_4)$ Alkyl oder$(C_1-C_4)$ Alkoxy substituiertes Phenyl, Benzthiazolyl oder $(C_1-C_4)$ Alkyl;
$X_1$, $X_2$ unabhängig voneinander H, Cl oder Br;
$X_3$ $CF_3$, Cl oder Br; und
$X_4$ $NO_2$, CN, Cl oder Br.

EP 0 158 810 A1

## Herbizide Mittel

Gegenstand der vorliegenden Erfindung sind herbizide Mittel, dadurch gekennzeichnet, daß sie eine Verbindung der Formel (I),

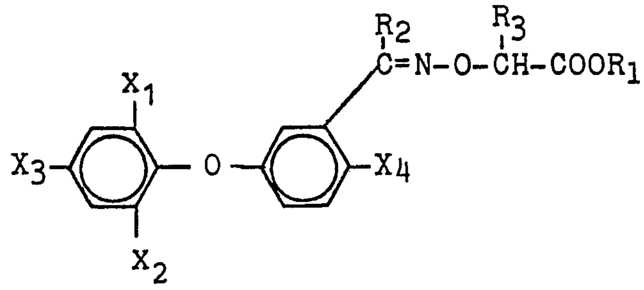

(I)

worin
$R_1$ = H, $(C_1-C_{10})$Alkyl oder ein Kationäquivalent,
$R_2$,$R_3$ = jeweils unabhängig voneinander H oder $(C_1-C_4)$-Alkyl,
$X_1$,$X_2$ = unabhängig voneinander H, Cl oder Br,
$X_3$ = $CF_3$, Cl oder Br, und
$X_4$ = $NO_2$, CN, Cl oder Br bedeuten,
in Kombination mit einer Verbindung der Formel (II),

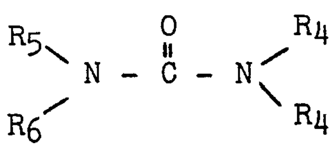

(II)

worin
$R_5$ = H oder $(C_1-C_4)$Alkyl,
$R_6$ = Phenyl, das durch ein oder zwei Reste der Gruppe Chlor, $(C_1-C_4)$Alkyl oder $(C_1-C_4)$Alkoxy substituiert ist, Benzthiazolyl oder $(C_1-C_4)$Alkyl, und
$R_4$ = unabhängig voneinander H oder $(C_1-C_4)$Alkyl bedeuten,
enthalten.

Als Kationäquivalent kommen insbesondere Alkali-, Erdalkali- oder gegebenenfalls substituierte Ammoniumionen infrage.

Die Verbindungen der Formel (I) sind einzeln wirksam gegen dikotyle Unkräuter wie Veronica sp., Viola sp. oder Amaranthus sp.. Erfindungsgemäß besonders geeignet von den Verbindungen der Formel (I) ist diejenige Verbindung, bei welcher $X_1$ = Chlor, $X_2$ = H, $X_3$ = $CF_3$, $X_4$ = $NO_2$, $R_1$,$R_2$ = $CH_3$ und $R_3$ = H bedeuten [(Verbindung Ia)].

Die Verbindungen der Formel (II) sind einzeln wirksam gegen monokotyle Unkräuter wie Alopecurus myosuroides, Apera spica venti, Poa sp. oder Phalaris sp.. Sie erfassen außerdem von den dikotylen Spezies beispielsweise Stellaria media, Matricaria sp. oder Sinapis sp..

Bei Versuchen zur Erweiterung des Wirkungsspektrums von Verbindungen der Formel (I) zeigten sich überraschenderweise auffallende synergistische Wirkungen, wenn diese mit Verbindungen der Formel (II) kombiniert wurden.

Als Verbindungen der Formel (II) eignen sich hierbei insbesondere die Wirkstoffe Isoproturon, Chlortoluron, Methabenzthiazuron, Metoxuron und Neburon, die alle in H. Martin, Ch. Worthing, Pesticide Manual, 5. Aufl. British Crop Protection Council (1977) beschrieben sind.

Die Mischungsverhältnisse der Komponente (I) zur Komponente (II) können in weiten Grenzen schwanken. In der Regel liegen sie bei 1:20 bis 1:300 insbesondere jedoch im Bereich von 1:50 bis 1:200.

Die erfindungsgemäßen herbiziden Kombinationen können entweder als Tankmischungen, bei denen die Wirkstoffe erst unmittelbar vor der Applikation miteinander vermischt werden oder als Fertigformulierungen zur Anwendung gebracht werden. Als Fertigformulierungen können sie in Form von benetzbaren Pulvern, emulgierbaren Konzentraten, versprühbaren Lösungen, Stäubemitteln oder Granulaten formuliert sein und enthalten die üblichen Formulierungshilfmittel wie Netz-, Haft-, Dispergiermittel, feste oder flüssige Inertstoffe sowie Mahlhilfsmittel oder Lösungsmittel.

Benetzbare Pulver sind in Wasser gleichmäßig dispergierbare Präparate, die neben dem Wirkstoff außer einem Verdünnungs- oder Inertstoff noch übliche Netzmittel wie polyoxethylierte Alkylphenole, Polyvinylalkohol, polyoxethylierte Oleyl- oder Stearylamine, Alkyl- oder Alkylphenylsulfonate und übliche Dispergiermittel wie ligninsulfonsaures Natrium, Kalium oder Calcium, 2,2'-dinaphthylmethan-6,6'-disulfonsaures Natrium, oder auch oleoylmethyltaurinsaures Natrium enthalten.

Emulgierbare Konzentrate werden durch Auflösen des Wirkstoffs in einem organischen Lösungsmittel wie Butanol, Cyclohexanon, Dimethylformamid, Xylol oder auch höhersiedenden Aromaten und Zusatz eines nichtionischen Netzmittels, beispielsweise eines polyoxethylierten Alkylphenols, eines polyoxethylierten Oleyl- oder Stearylamins oder eines Alkyl- oder Alkylphenylsulfonats, erhalten. Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln wie Polyvinylalkohol, polyacrylsaurem Natrium oder auch Mineralölen auf die Oberfläche von Trägerstoffen wie Sand, Kaolinite, oder von granuliertem Inertmaterial.

Die Konzentrationen der Wirkstoffe in den handelsüblichen Formulierungen können verschieden sein. In benetzbaren Pulvern variiert die Gesamtwirkstoffkonzentration zwischen etwa 20 % und 90 %, der Rest besteht aus den oben angegebenen Formulierungszusätzen. Bei emulgierbaren Konzentraten beträgt die Wirkstoffkonzentration etwa 10 % bis 80 %.

Zur Anwendung werden die handelsüblichen Konzentrate gegebenenfalls in üblicher Weise verdünnt, z.B. bei benetzbaren Pulvern und emulgierbaren Konzentraten mittels Wasser. Mit den äußeren Bedingungen wie Temperatur, Feuchtigkeit u.a. variiert die erforderliche Aufwandmenge; sie kann für die Kombination insbesondere innerhalb eines Bereichs von 0,05 bis 10 kg Wirksubstanz pro ha liegen.

Biologische Beispiele:

In den folgenden Anwendungsbeispielen wurden die Testpflanzen im Gewächshaus in Töpfen angezogen. Die Applikation der in Wasser verdünnten Konzentrate erfolgte, als die monokotylen Pflanzen Alopecurus myosuroides, Triticum aestivum und Hordeum vulgare das 3-4 Blattstadium erreicht hatten und die dikotylen Pflanzen - Stellaria media, Chenopodium album und Veronica hederifolia - bis zu 5-10 cm gewachsen waren.

Nach 4 Wochen wurde die Wirkung (Schädigung) bonitiert. In den nachfolgenden Tabellen sind die Versuchsergebnisse wiedergegeben.

Der Nachweis des Synergismus ergibt sich aus dem Vergleich des aus den Wirkungen der Einzelkomponenten errechneten additiven Wirkungsgrads mit dem experimentell gefundenen Wirkungsgrad der Wirkstoffkombinationen. Die Errechnung des additiven Wirkungsgrades erfolgt nach der Formel von S.R. Colby (vgl. Calculating synergistic and antagonistic responses of herbizide combinations, Weeds, 15, 1967, S. 20 bis 22).

Diese Formel lautet:

$$E = X + Y - \frac{X \cdot Y}{100}$$

wobei

X = % Schädigung durch Herbizid (I) bei x kg/ha Aufwandmenge,

X = % Schädigung durch Herbizid (II) bei y kg/ha Aufwandmenge,

E = % die erwartete Schädigung der Herbizide (I)+(II) bei x + y kg/ha Aufwandmenge bedeuten.

Ist die tatsächliche Schädigung größer als berechnet, so ist die Wirkung der Wirkstoffkombination mehr als additiv, d.h., es liegt ein synergistischer Effekt vor. Dies wird anhand der biologischen Beispiele der nachfolgenden Tabelle demonstriert, wobei in der rechten Spalte hinter den Ergebnissen der Kombinationsbehandlungen in Klammern die aus obiger Formel errechneten additiven Wirkungen angegeben sind.

Bekämpfung von mono- und dikotylen Unkräutern in Getreide

| Verbindung | Dosis in gAS/ha | Schädigung in % von | | | | | |
|---|---|---|---|---|---|---|---|
| | | Alopecurus myosuroides | Stellaria media | Chenopodium album | Veronica hederifolia | Triticum aestivum | Hordeum vulgar |
| (Ia) | 5 | 0 | 0 | 0 | 24 | 0 | 0 |
| | 10 | 0 | 15 | 0 | 40 | 0 | 0 |
| | 15 | 10 | 25 | 10 | 60 | 5 | 8 |
| (IIa) | 500 | 55 | 65 | 65 | 20 | 0 | 0 |
| | 750 | 70 | 90 | 85 | 30 | 0 | 0 |
| | 1000 | 90 | 100 | 100 | 40 | 0 | 0 |
| (IIb) | 500 | 45 | 60 | 55 | 25 | 0 | 0 |
| | 750 | 65 | 85 | 80 | 40 | 0 | 0 |
| | 1000 | 75 | 100 | 100 | 45 | 0 | 0 |
| (IIc) | 500 | 35 | 50 | 50 | 30 | 0 | 0 |
| | 750 | 50 | 70 | 75 | 45 | 0 | 0 |
| | 1000 | 70 | 100 | 100 | 55 | 0 | 0 |

Bekämpfung von mono- und dikotylen Unkräutern in Getreide

| Verbindung | Dosis in gAS/ha | Schädigung in % von | | | | | |
|---|---|---|---|---|---|---|---|
| | | Alopecurus myosuroides | Stellaria media | Chenopodium album | Veronica hederifolia | Triticum aestivum | Hordeum vulgar |
| (Ia)+(IIa) | 5 + 500 | 60 (55) | 80 (65) | 75 (65) | 60 (40) | 0 | 0 |
| | 5 + 1000 | 100 (90) | - | - | 70 (55) | 0 | 0 |
| | 10 + 500 | 65 (55) | 90 (72) | 80 (65) | 78 (52) | 3 | 5 |
| (Ia)+(IIb) | 5 + 500 | 55 (45) | 82 (60) | 70 (55) | 65 (44) | 0 | 0 |
| | 5 + 1000 | 85 (75) | - | - | 75 (59) | 0 | 0 |
| | 10 + 500 | 58 (45) | 85 (66) | 78 (55) | 85 (55) | 5 | 7 |
| (Ia)+(IIc) | 5 + 500 | 45 (35) | 72 (50) | 68 (50) | 70 (48) | 0 | 0 |
| | 5 + 1000 | 80 (70) | 100 (100) | 100 (100) | 85 (67) | 0 | 0 |
| | 10 + 500 | 50 (35) | 90 (58) | 87 (50) | 90 (58) | 7 | 9 |

(Ia) = s. Beschreibung S. 2

(IIa)= Isoproturon, (IIb) = Chlortoluron, (IIc) = Methabenzthiazuron

AS = Aktivsubstanz

0158810

PATENTANSPRÜCHE: HOE 84/F 054

1. Herbizide Mittel, dadurch gekennzeichnet, daß sie eine Verbindung der Formel (I),

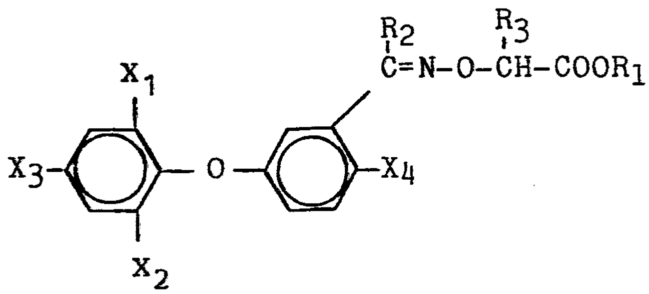

(I)

worin

$R_1$ = H, $(C_1-C_{10})$Alkyl oder ein Kationäquivalent,

$R_2,R_3$ = jeweils unabhängig voneinander H oder$(C_1-C_4)$-Alkyl,

$X_1,X_2$ = unabhängig voneinander H, Cl oder Br,

$X_3$ = $CF_3$, Cl oder Br, und

$X_4$ = $NO_2$, CN, Cl oder Br bedeuten,

in Kombination mit einer Verbindung der Formel (II),

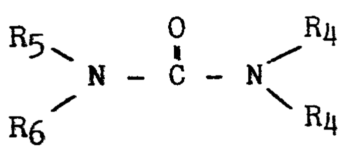

(II)

worin

$R_5$ = H oder $(C_1-C_4)$Alkyl,

$R_6$ = Phenyl, das durch ein oder zwei Reste der Gruppe Chlor, $(C_1-C_4)$Alkyl oder $(C_1-C_4)$Alkoxy substituiert ist, Benzthiazolyl oder $(C_1-C_4)$Alkyl, und

$R_4$ = unabhängig voneinander H oder $(C_1-C_4)$Alkyl bedeuten,

enthalten.

2. Herbizide Mittel gemäß Anspruch 1, dadurch gekennzeichnet, daß sie eine Verbindung der Formel (I), worin $X_1$= Cl, $X_2$= H, $X_3$= $CF_3$, $X_4$= $NO_2$; $R_1$, $R_2$= $CH_3$ und $R_3$= H bedeuten, enthalten.

3. Herbizide Mittel gemäß Ansprüchen 1 oder 2, dadurch gekennzeichnet, daß sie als Verbindung der Formel (II) das Herbizid Isoproturon, Chlortoluron, Methabenzthiazuron, Metoxuron oder Neburon enthalten.

4. Herbizide Mittel gemäß Ansprüchen 1 bis 3, dadurch gekennzeichnet, daß sie das Mischungsverhältnis der Verbindung der Formel (I) zur Verbindung der Formel (II) im Bereich zwischen 1:20 bis 1:300 variiert.

5. Verfahren zur Bekämpfung von Schadpflanzen, dadurch gekennzeichnet, daß man auf die Kulturpflanzen oder die Anbaufläche eine wirksame Menge eines herbiziden Mittels gemäß Ansprüchen 1 bis 4 appliziert.

6. Verwendung von herbiziden Mitteln gemäß Ansprüchen 1 bis 4 zur Bekämpfung von Schadpflanzen.

Europäisches Patentamt

# EUROPÄISCHER RECHERCHENBERICHT

0158810

Nummer der Anmeldung

EP 85 10 2685

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | GB-A-2 049 695 (PPG INDUSTRIES)<br>* Seite 15, Zeilen 17-25, 28-30 *<br>----- | 1-6 | A 01 N 47/30<br>A 01 N 47/36 //<br>(A 01 N 47/30<br>A 01 N 37:50<br>A 01 N 37:38 )<br>(A 01 N 47/36<br>A 01 N 37:50<br>A 01 N 37:38 ) |
| | | | RECHERCHIERTE SACHGEBIETE (Int. Cl.4) |
| | | | A 01 N |

Der vorliegende Recherchenbericht wurde für alle Patentansprüche erstellt

| Recherchenort | Abschlußdatum der Recherche | Prüfer |
|---|---|---|
| DEN HAAG | 25-06-1985 | DECORTE D. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument